# EUROPEAN PATENT APPLICATION

(11) **EP 4 772 388 A1**
(43) Date of publication of application: **08.07.2026**
(21) Application number: 25150178.9
(22) Date of filing: 03.01.2025
(51) Int. Cl.: B60L 50/64, B60L 58/21, B60L 58/22, H01M 10/42, H01M 10/48, H01M 50/209, H01M 50/289, H01M 50/298, H01M 50/267, H01M 50/249, B60L 58/19, H01M 50/509

(54) **BATTERY SYSTEM, ELECTRIC VEHICLE AND METHOD FOR SWITCHING A VOLTAGE LEVEL OF THE BATTERY SYSTEM**

(71) Applicant: SAMSUNG SDI CO., LTD., Yongin-si, Gyeonggi-do 17084 (KR)
(72) Inventor: Haring, Fritz, 8600 Bruck an der Mur (AT); Peer, Christian, 8046 Stattegg (AT); Reinprecht, Wolfgang, 8144 Tobelbad (AT); Kraberger, Gernot, 8010 Graz (AT)
(74) Representative: Gulde & Partner

(57) **Abstract**

The present disclosure refers to a battery system (100). The battery system (100) includes a plurality of battery modules (10). Each of the battery modules (10) includes a plurality of battery cells (12) stacked along a stacking direction (S). First halves of the plurality of battery cells (12) of each adjacent battery module (10) are electrically connected with each other to form a first electric stack (14) and second halves of the plurality of battery cells (12) of each adjacent battery module (10) are electrically connected with each other to form a second electric stack (16). The battery system (100) is configured to selectively connect the first electric stack (14) and the second electric stack (16) in series or in parallel.

## Description

### Field of the Disclosure

The present disclosure relates to a battery system and an electric vehicle including the battery system. Further, the present disclosure relates to a method for switching the voltage level of the battery system.

### Technological Background

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed in either a block design or a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually include a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further include a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

Conventionally, a charging voltage is on the same general voltage level as the battery. In other words, the charging voltage level must correspond to the voltage level of the battery system to be charged. However, as there is a variety of chargers available providing energy on different voltage levels, there is a need to increase the flexibility of batteries with respect to the voltage levels for charging. For example, powertrains of electric vehicles (EV) typically operate on a 400 V or on an 800 V voltage level. In order to achieve voltages of such voltage levels, battery systems of EVs use appropriate serial connections of the battery cells. Some of the charging infrastructure of EVs operates at a 400 V voltage level such that there is the need to enable charging battery systems requiring an 800 V charging voltage with a 400 V charger.

Additional parts or circuits may be implemented to adapt the voltage level of a particular charger to correspond to the voltage level of the battery system. This can be achieved by using voltage boosters, e.g. High Voltage (HV) boosters. However, the use of voltage boosters requires additional parts which increases costs and weight of the batteries.

Another approach is to enable the battery system to be switched between different voltage level states. For example, two 400 V subpacks can be connected in parallel for 400 V charging or connected in series for 800 V charging as disclosed in the published document DE 10 2020 117 681 A1. The use of two subpacks is an inflexible solution with regard to construction space which is also limited in EVs.

It is thus an object of the present invention provide a battery system which is chargeable or dischargeable at different voltage levels and which provides more flexibility with regard to construction space.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a battery system is provided including a plurality of battery modules, each of the battery modules including a plurality of battery cells stacked along a stacking direction, wherein first halves of the plurality of battery cells of each adjacent battery module are electrically connected with each other to form a first electric stack and second halves of the plurality of battery cells of each adjacent battery module are electrically connected with each other to form a second electric stack, and wherein the battery system is configured to selectively connect the first electric stack and the second electric stack in series or in parallel.

According to an aspect of the present disclosure, each of the battery modules may include a carrier configured to mechanically fix the battery cells of the battery module to provide a structural entity of the battery module.

According to an aspect of the present disclosure, the first halves and the second halves of the plurality of battery cells of each adjacent battery module may be connected in series with each other.

According to an aspect of the present disclosure, the first electric stack and/or the second electric stack may be configured to provide more than 200 V, more than 300 V or substantially 400 V, respectively.

According to an aspect of the present disclosure, the battery system may further include a separator configured to physically separate and/or electrically isolate the first halves of the battery modules from the second halves of the battery modules.

According to an aspect of the present disclosure, the separator may include a partition wall or a spacer extending between the first and second halves of the battery modules in a direction orthogonal to the stacking direction.

According to an aspect of the present disclosure, the separator may further include at least one additional spacer arranged between each of the first halves and the second halves of the battery modules.

According to an aspect of the present disclosure, the battery system may further include a control unit connected to the first and second electric stacks and configured to selectively connect the first electric stack and the second electric stack in series or in parallel.

According to an aspect of the present disclosure, the battery system may further include at least one inner electrical connection extending between the first halves or the second halves of the battery modules configured to electrically connect the first electric stack and/or the second electric stack with the control unit.

According to an aspect of the present disclosure, the battery system may further include at least one outer electrical connection extending next to the outer battery cells of the battery modules configured to electrically connect the first electric stack and/or second electric stack with the control unit.

According to an aspect of the present disclosure, the battery system may further include a housing into which the plurality of battery modules is accommodated, wherein each of the battery modules extends between opposite housing walls along the stacking direction and wherein the battery modules are arranged next to each other in a direction orthogonal to the stacking direction.

According to an aspect of the present disclosure, the amount of battery cells and/or the size of a battery module along the stacking direction may vary between at least two of the battery modules.

According to an aspect of the present disclosure, the battery cells may be prismatic cells.

According to another aspect of the present disclosure, an electric vehicle is provided including the battery system described above.

Yet another aspect of the present disclosure refers to a method for switching a voltage level of a battery system, wherein the method includes the steps of a) providing the battery system described above, and b) selectively connecting the first electric stack and the second electric stack of the battery system in series or in parallel.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a top view of a battery system according to an embodiment of the present disclosure,
- FIG. 2: illustrates a perspective view of a central portion of the battery system,
- FIG. 3: illustrates a schematic circuit diagram of a control unit for switching the voltage level of the battery system, and
- FIG. 4: illustrates a schematic flow chart of a method for switching a voltage level of the battery system according to an embodiment of the present disclosure.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery modules. Each of the battery modules forms a structural entity and includes a plurality of battery cells stacked along a stacking direction. First halves of the plurality of battery cells of each adjacent battery module are electrically connected with each other to form a first electric stack. Second halves, i.e. the remaining halves, of the plurality of battery cells of each adjacent battery module are electrically connected with each other to form a second electric stack. The battery system is configured to selectively connect the first electric stack and the second electric stack in series or in parallel.

A structural entity means that the parts of the entity are substantially physically linked or coupled to each other such that the entire battery module may be inserted to or removed from the battery system as a whole. In other words, each battery module may be a self-contained module. For example, the battery module may be a pre-assembled unit, e.g. which is to be inserted into the battery system during manufacturing thereof. That is, a battery module may be considered as one physical group of battery cells. The group of battery cells may be fixed to each other or to a common structural component, e.g. to a module carrier to form the structural entity. The structural entity properties of the battery modules facilitate processing, manufacturing and maintenance of the battery system.

The battery cells of the first half of each battery module may be consecutive (or adjacent) battery cells from a first end of the respective battery module along the stacking direction to the middle of the battery module and/or the battery cells of the second (or the remaining) half of each battery module may be consecutive (or adjacent) battery cells from a second end opposite to the first end of the respective battery module along the stacking direction to the middle of the battery module. In other words, the battery cells of the respective halves of the battery modules may be adjacent battery cells with respect to the stacking direction. That is, although (at least two battery modules of) the battery modules of the battery system are physically distinct and self-contained modules, they are electrically connected with adjacent battery modules to form electric stacks beyond their respective modular (physical) borders. By electrically splitting the battery modules (through connecting halves of the battery cells of adjacent battery modules), a higher degree of freedom and flexibility with respect to construction space may be achieved. In other words, the battery system may be designed more flexible and space-saving, i.e. better tailored to available packaging or construction spaces within the product, e.g. a vehicle.

Selectively connecting the first electric stack and the second electric stacks in series or in parallel allows to adjust the voltage level of the battery system. When the electric stacks are connected in series, the individual voltage levels of the individual electric stacks are added up and when the electric stacks are connected in parallel, the individual voltage levels of the individual electric stacks remain as they are. Accordingly, the battery system is chargeable or dischargeable at different voltage levels based on the switching state of the electric stacks and provides more flexibility with regard to construction space. For example, a battery system with an 800 V voltage level for charging and/or discharging may be achieved by selectively connecting the first electric stack and the second electric stack, each providing or being configured to provide a 400 V voltage level, in series. In case a charger merely provides a 400 V voltage level (or a load connected to the battery system requires a 400 V voltage level) the electric stacks can be switched in parallel for 400V charging and/or discharging.

According to one embodiment, each of the battery modules may include a carrier configured to mechanically fix the battery cells of the battery module to provide the structural entity of the battery module. In other words, each of the battery cells of a battery module may be mounted on the carrier. The carrier may be integrally formed or assembled by a plurality of parts. The use of one carrier for each battery module further facilitates processing, manufacturing and maintenance of the battery system.

According to another embodiment, the first halves and the second halves of the plurality of battery cells of each adjacent battery module may be connected in series with each other. Due to the serial connection of the battery cells of adjacent battery modules, a higher voltage level may be achieved. Higher voltage levels allow faster charging rates and/or better propulsions of an electric vehicle.

According to another embodiment, the first electric stack and/or the second electric stack may be (each) configured to provide more than 200 V, more than 300 V or substantially 400 V, respectively. For example, the first electric stack and/or the second electric stack may each be configured to be at a voltage level between 200 V or 300 V and 1600 V, 1200 V or 800 V. In case each of the first and electric stacks is configured to provide 400 Volt, the battery system may be charged by 400 V chargers and 800 V chargers depending on the switching state of the electric stacks. High voltages are required for fast charging rates and proper propulsion of an electric vehicle.

According to another embodiment, the battery system may further include a separator configured to physically separate and/or electrically isolate the first halves of the battery modules from the second halves of the battery modules. For example, each of the battery modules may include a middle separation configured to separate the (electrical) parts of the battery module belonging to the first electric stack from the (electrical) parts of the battery module belonging to the second electric stack.

According to another embodiment, the separator may include a partition wall or a spacer extending between the first and second halves of the battery modules in a direction orthogonal to the stacking direction. For example, the corresponding middle battery cell of each battery module is left out such that a space for the separator, e.g. the partition wall, is provided. The separator, e.g. the partition wall, may extend continuously along a direction orthogonal to the stacking direction to provide reliable isolation between the electric stacks. The separator, e.g. the partition wall and/or the spacer, may be configured to provide an anti-creepage distance between the first and second halves of the battery modules. In other words, the thickness of the separator, e.g. the partition wall and/or the spacer, along the stacking direction is sufficient so as to prevent creepage occurring between the halves of each of the battery modules.

According to another embodiment, the battery system may further include at least one additional spacer arranged between first halves and/or second halves of adjacent battery modules, e.g. adjacent to the other spacer. Due to the use of an additional spacer, an anti-creepage distance between the respective first halves and second halves of the battery modules may be achieved. In other words, the combined length of the spacers along a direction orthogonal to the stacking direction is sufficient so as to prevent creepage occurring between the first halves and the second halves of the battery modules.

According to another embodiment, the battery system may further include a control unit connected to the first and second electric stacks and configured to selectively connect the first electric stack and the second electric stack in series or in parallel. The control unit may include a switching circuit including a plurality of electromechanical switches configured to allow a selective connection of the first electric stack and the second electric stack in series or in parallel. The control unit may be a BDU electrically connected between the battery modules and the battery system terminals. The BDU may include electromechanical switches that open or close high current paths between the electric stacks and the charging or discharging system. The BDU may be configured to sense and control the current flow between paths between the electric stacks and the charging or discharging system.

According to another embodiment, the battery system may include at least one inner electrical connection extending between the first halves or the second halves of the battery modules configured to electrically connect the first electric stack and/or the second electric stack with the control unit. For example, the inner electrical connection may be a busbar, a cable or a combination thereof. The inner electrical connection may be a high voltage line. For example, an inner electrical connection may be centrally arranged in the battery system, e.g. on both sides of the separator with respect to the stacking direction, respectively, to form an electrical connection path for each of the first and second electric stacks.

According to another embodiment, the battery system may further include at least one outer electrical connection extending next to the outer battery cells of the battery modules configured to electrically connect the first electric stack or the second electric stack with the control unit. The outer battery cell may be a battery cell arranged outermost with respect to the stacking direction of the battery modules. For example, the outer electrical connection may be a busbar, a cable or a combination thereof. The outer electrical connection may be a high voltage line. For example, an outer electrical connection may be arranged on both sides of the battery modules with respect to the stacking direction, respectively, to form an electrical connection path for each of the first and second electric stacks.

According to another embodiment, the battery system may further include a housing into which the plurality of battery modules is accommodated. Each of the battery modules may extend between opposite housing walls along the stacking direction and the battery modules may be arranged next to each other in a direction orthogonal to the stacking direction. Accordingly, a compact and space saving battery system may be achieved. The control unit may also be accommodated in the housing.

According to another embodiment, the amount of battery cells and/or the size of a battery module along the stacking direction may vary between at least two of the battery modules. In other words, the number of battery cells of the battery modules may be different. Correspondingly, differently sized battery modules may be used to better fit available construction spaces, thereby further increasing the degree of freedom and flexibility of the design of the battery system with respect to the available construction space.

According to another embodiment, the battery cells may be prismatic cells. Prismatic battery cells have housings with rectangular shapes, i.e. two parallel long sides and two parallel short sides extending orthogonally to the long sides. The rectangular shapes are desirable as they allow efficiently stacking multiple battery cells in a battery module, e.g. vis-à-vis with the long sides. Therefore, prismatic battery cells are well-suited for energy-intensive applications and are commonly used in energy storage systems and electric vehicles.

Further, the invention pertains to an electric vehicle including the battery system as disclosed herein. The features and advantages described in view of the above-mentioned battery system may be analogously applied to the electric vehicle.

Further, the invention pertains to a method for switching a voltage level of a battery system, namely the battery system disclosed herein. The features and advantages described in view of the above-mentioned battery system may be analogously applied to the method for switching the voltage level of the battery system.

According to one step of the method, a battery system as disclosed herein is provided.

According to another step of the method, the first electric stack and the second electric stack of the battery system are selectively connected in series or in parallel.

### Specific Embodiments

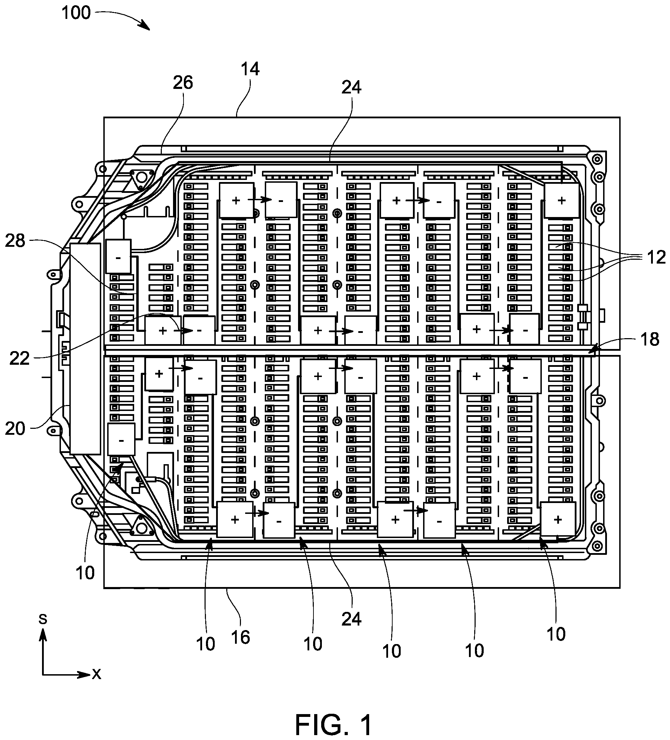

FIG. 1 shows a top view of a battery system 100 according to an embodiment of the present disclosure. The battery system 100 includes a plurality of battery modules 10. Each of the battery modules 10 forms a structural entity and includes a plurality of battery cells 12 stacked along a stacking direction S.

The battery system 100 exemplarily includes six battery modules 10 arranged adjacent to each other with respect to a direction x orthogonal to the stacking direction S. However, the number of battery modules 10 may also be different. In particular, the particular design of the battery system 100 may be adapted to the available construction space for the battery system 100. As FIG: 1 depicts a top view of the battery system 100, it is apparent that the direction x is also orthogonal with respect to a height direction of the battery system 100.

The battery system 100 includes a housing 26 and each of the six battery modules 10 are accommodated therein. In order to achieve a compact and space saving arrangement of the battery system 100, the battery modules 10 substantially (entirely) extend from one wall of the housing 26 to the opposite wall of the housing 26 along the stacking direction S and are closely packed adjacent to each other along the direction x orthogonal to the stacking direction S within the housing 26. The battery cells 12 are prismatic cells having housings with rectangular shapes, i.e. two parallel long sides and two parallel short sides extending orthogonally to the long sides. The rectangular shapes are desirable as they allow efficiently stacking multiple battery cells 12 to a battery module 10, e.g. vis-à-vis with the long sides along the stacking direction S. Therefore, prismatic battery cells 12 are well-suited for energy-intensive applications and are commonly used in energy storage systems and electric vehicles.

Each battery module 10 includes a carrier (not shown) configured to mechanically fix the battery cells 12 of the battery module 10 to provide the structural entity of the battery module 10. In other words, the battery cells 12 of each of the battery modules 10 are physically linked or coupled to each other such that the entire battery module 10 may be inserted to or removed from the battery system 100 as a whole. This facilitates processing, manufacturing and maintenance of the battery system 100.

As also shown in FIG. 1, one of the battery modules 10 includes less battery cells 12 than the other battery modules 10 (see left battery module 10 in FIG. 1). Accordingly, the size of this battery module 10 along the stacking direction S is smaller so that housing 26 of the battery system 100 can be adapted thereto. As a consequence, the battery system 100 may be adapted better to the constraints of available constructions spaces. Correspondingly, differently sized battery modules may be used to better fit available construction spaces, thereby further increasing the degree of freedom and flexibility of design of the battery system 100 with respect to the available construction space.

Each of the battery modules 10 is electrically divided into a first half and a second half of battery cells 12. The first halves of each adjacent battery module 10 are electrically connected with each other to form a first electric stack 14 and the corresponding second halves of the plurality of battery cells 12 of each adjacent battery module 10 are electrically connected with each other to form a second electric stack 16 (cf. dotted areas in FIG. 1). That is, although the battery modules 10 of the battery system 100 are physically distinct from each other, the battery modules 10 are electrically connected with adjacent battery modules 10 to form electric stacks 14, 16 beyond their respective modular (physical) borders. By electrically splitting the battery modules 10 through connecting the respective halves of the battery cells 10 of adjacent battery modules 10 to each other, a higher degree of freedom and flexibility with respect to construction space may be achieved. In other words, the battery system 100 may be designed more flexible and space-saving, i.e. better tailored to available packaging or construction spaces within the product, e.g. a vehicle.

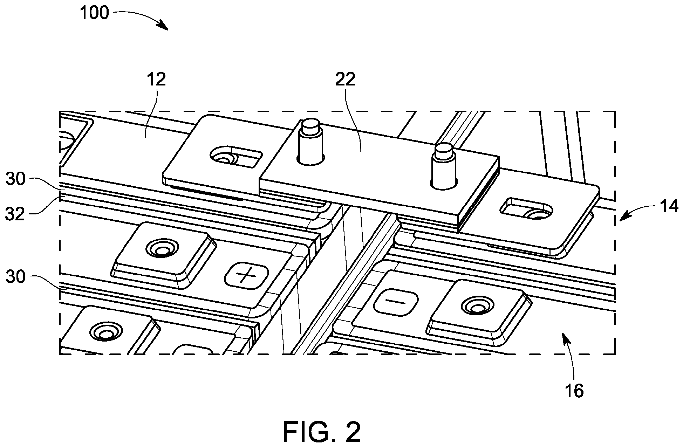

As indicated in FIG. 1, the first and second halves of each battery module 10 are electrically isolated from each other through a separator 18, which will be explained in detail in view of FIG. 2.

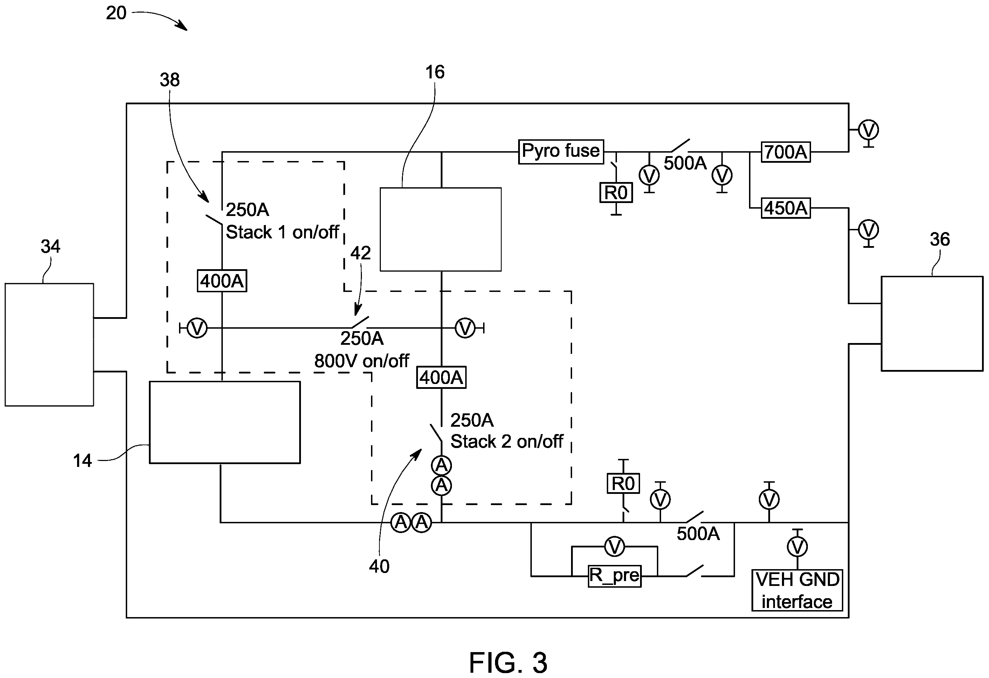

The battery system 100 further includes a control unit 20 configured to selectively connect the first electric stack 14 and the second electric stack 16 in series or in parallel, which will be explained in detail in view of FIG. 3. The control unit 20 is also accommodated in the housing 26. The control unit 20 may be a battery disconnect unit, BDU. Selectively connecting the first electric stack 14 and the second electric stacks 14 in series or in parallel allows to adjust the (overall) voltage level of the battery system 100. When the electric stacks 14, 16 are connected in series, the individual voltage levels of the individual electric stacks 14, 16 are added up and when the electric stacks 14, 16 are connected in parallel, the individual voltage levels of the individual electric stacks 14, 16 remain as they are, i.e. as defined by the electrically connected battery cells 12 of the battery modules 10. Thus, the battery system 100 is chargeable or dischargeable at different voltage levels based on the switching state of the electric stacks 14,16 and provides more flexibility with regard to construction space.

For example, each of the first and second electric stacks 14, 16 of the battery system 100 may be configured to provide a 400 V voltage level. That is, the number of battery cells 12 and battery modules 10 may be selected so as to correspond to a 400 V input/output voltage level. In the embodiment of FIG. 1, dozens of battery cells 12, e.g. ca. 90 battery cells 12, are connected in series for each electric stack 14, 16 to obtain a 400 V voltage level (i.e. ca. 180 battery cells 12 in total). A battery system 100 with an 800 V voltage level for charging and/or discharging may then be achieved by selectively connecting the first electric stack 14 and the second electric stack 16 in series through the control unit 20. In case a charger merely provides a 400 V voltage level or a load connected to the battery system 100 requires a 400 V voltage level, the electric stacks 14, 16 can be switched in parallel through the control unit 20 for 400V charging and/or discharging.

For reasons of intelligibility, a high voltage path 28 through each of the first and second electric stacks 14, 16 is schematically shown in FIG. 1. The high voltage path 28 starts at a first terminal of the control unit 20 and ends at a second terminal of the control unit 20. Each of the battery cells 12 of the respective halves of the battery modules 10 are connected in series with respective halves of adjacent battery modules 10 through inner electrical connections 22 (indicated by arrows in FIG. 1). The inner electrical connections 22 are configured to electrically connect the first electric stack 14 and the second electric stack 16 with the first terminals of the control unit 20, respectively. As shown in FIG. 1, the electric stacks 14, 16 each may be designed such that the high voltage path 28 meanders therethrough. The second terminals of the control unit 20 are connected to outer electrical connections 24 which are connected to the ends of the meandering parts of the high voltage paths 28, respectively. For the implementation of the inner and outer electrical connections 22, 24 busbars, cables or a combination thereof may be used.

FIG. 2 shows a perspective view of a central portion of the battery system 100 as disclosed in FIG. 1. The central portion shown in FIG. 2 refers to the junction section between the first and the second halves of the battery modules 10. The first halves of adjacent battery modules 10 are connected via the inner electrical connection 22 implemented as a busbar. Although the inner electrical connection 22 is only shown in view of the first electric stack 14 in FIG. 2, it may be analogously applied to the second electric stack 16.

Between each of the battery cells 12, a (first) spacer 30 is arranged along the stacking direction S to ensure electrical isolation between each of the plurality of battery cells 12. However, directly between the first halves and the second halves of the battery modules 10, i.e. at the junction portion between the first electric stack 14 and the second electric stack 16, an additional spacer 32 is arranged adjacent to the (first) spacer 30. Due to the use of an additional spacer 32, an anti-creepage distance between the respective first halves and second halves of the battery modules 10 may be achieved. In other words, the combined length of the spacers 30 and 32 along the direction x orthogonal to the stacking direction S is sufficient so as to prevent creepage occurring between the first halves and the second halves of the battery modules 10. For the case that more space along the stacking direction S is required, the width of the spacers 30, 32 along the stacking direction S may be decreased and the height of the spacers 30, 32 may be increased accordingly to ensure sufficient (or the same) isolation properties.

FIG. 3 illustrates a schematic circuit diagram of a control unit 20 for switching the voltage level of the battery system 100. The battery system 100 includes a rear connector 34 and a front connector 36. The rear connector 34 may be an 800 V EDU, an 800 V DCFC or a 400 V DCFC high voltage connector. The front connector 36 may be an 800 V EDU high voltage connector. The control unit 20 and the first and second electric stacks 14, 16 may be electrically connected between the rear connector 34 and the front connector 36 in a manner such that the first and second electric stacks 14 and 16 may be connected in series or in parallel. In order to implement the switching of the serial or parallel connection states, the control unit 20 may include a first electric stack switch 38 configured to enable or disable the electrical connection of the first stack 14 (on/off), a second electric stack switch 40 configured to enable or disable the electrical connection of the second stack 16 (on/off), and a voltage switch 42 connected in series with (or arranged between) the first and second electric stack switches 38, 40 such that the voltage switch 42 is configured to connect the first and second electric stacks 14, 16 in series or in parallel. Each of the switches 38, 40, 42 may be an electromechanical switch. The components marked with the dotted area in FIG. 3 are the components allowing the switching between the serial and parallel connection of the electric stacks 14, 16, together with the logic implemented in the battery management system, BMS (not shown).

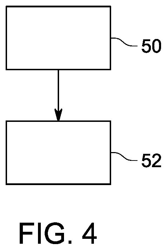

FIG. 4 illustrates a schematic flow chart of a method for switching a voltage level of the battery system 100 according to an embodiment of the present disclosure.

According to a first step 50, the battery system 100 is provided.

According to a second step 52, the first electric stack 14 and the second electric stack 16 of the battery system 100 is selectively connected in series or in parallel.

### Reference signs

- 10: battery modules
- 12: battery cells
- 14: first electric stack
- 16: second electric stack
- 18: separator
- 20: control unit
- 22: inner electrical connection
- 24: outer electrical connection
- 26: housing
- 28: high voltage path
- 30: spacer
- 32: additional spacer
- 34: rear connector
- 36: front connector
- 38: first electric stack switch
- 40: second electric stack switch
- 42: voltage switch

- 100: battery system

- S: stacking direction
- x: direction orthogonal to stacking direction

- 50: first method step - providing battery system
- 52: second method step - switching voltage level

## Claims

1. A battery system (100), comprising:
a plurality of battery modules (10), each of the battery modules (10) comprising a plurality of battery cells (12) stacked along a stacking direction (S),
wherein first halves of the plurality of battery cells (12) of each adjacent battery module (10) are electrically connected with each other to form a first electric stack (14) and second halves of the plurality of battery cells (12) of each adjacent battery module (10) are electrically connected with each other to form a second electric stack (16), and
wherein the battery system (100) is configured to selectively connect the first electric stack (14) and the second electric stack (16) in series or in parallel.

2. The battery system (100) as claimed in claim 1, wherein each of the battery modules (10) comprises a carrier configured to mechanically fix the battery cells (12) of the battery module (10) to provide a structural entity of the battery module (10).

3. The battery system (100) as claimed in any one of the preceding claims, wherein the first halves and the second halves of the plurality of battery cells (12) of each adjacent battery module (10) are connected in series with each other.

4. The battery system (100) as claimed in any one of the preceding claims, wherein the first electric stack (14) and/or the second electric stack (16) is configured to provide more than 200 V, more than 300 V or substantially 400 V, respectively.

5. The battery system (100) as claimed in any one of the preceding claims, further comprising a separator (18) configured to physically separate and/or electrically isolate the first halves of the battery modules (10) from the second halves of the battery modules (10).

6. The battery system (100) as claimed in claim 5, wherein the separator (18) comprises a partition wall or a spacer extending between the first and second halves of the battery modules (10) in a direction (x) orthogonal to the stacking direction (S).

7. The battery system (100) as claimed in claim 6, the separator (18) further comprises at least one additional spacer arranged between each of the first halves and the second halves of the battery modules (10).

8. The battery system (100) as claimed in any one of the preceding claims, further comprising a control unit (20) connected to the first and second electric stacks (16) and configured to selectively connect the first electric stack (14) and the second electric stack (16) in series or in parallel.

9. The battery system (100) as claimed in claim 8, further comprising at least one inner electrical connection (22) extending between the first halves or the second halves of the battery modules (10) configured to electrically connect the first electric stack (14) and/or the second electric stack (16) with the control unit (20).

10. The battery system (100) as claimed in claims 8 or 9, further comprising at least one outer electrical connection (24) extending next to the outer battery cells (12) of the battery modules (10) configured to electrically connect the first electric stack (14) and/or the second electric stack (16) with the control unit (20).

11. The battery system (100) as claimed in any one of the preceding claims, further comprising a housing (26) into which the plurality of battery modules (10) is accommodated, wherein each of the battery modules (10) extends between opposite housing (26) walls along the stacking direction (S) and wherein the battery modules (10) are arranged next to each other in a direction (x) orthogonal to the stacking direction (S).

12. The battery system (100) as claimed in any one of the preceding claims, wherein the amount of battery cells (12) and/or the size of a battery module (10) along the stacking direction (S) varies between at least two of the battery modules (10).

13. The battery system (100) as claimed in any one of the preceding claims, wherein the battery cells (12) are prismatic cells.

14. An electric vehicle comprising the battery system (100) as claimed in any one of the preceding claims.

15. A method for switching a voltage level of a battery system (100), comprising the steps of:
a) providing (50) a battery system (100) as claimed in any one of the claims 1 to 13; and
b) selectively connecting (52) the first electric stack (14) and the second electric stack (16) of the battery system (100) in series or in parallel.
